# EUROPEAN PATENT APPLICATION

(11) **EP 1 289 212 A1**
(43) Date of publication of application: **05.03.2003**
(21) Application number: 01307288.9
(22) Date of filing: 28.08.2001
(51) Int. Cl.: H04L 25/14

(54) **Electro-optic interface for parallel data transmission**

(71) Applicant: LUCENT TECHNOLOGIES INC., Murray Hill, New Jersey 07974-0636 (US)
(72) Inventor: Brachmann, Markus, 90455 Nuremberg (DE); Otto, Klaus-Holger, Nuremberg (DE)
(74) Representative: Sarup, David Alexander

(57) **Abstract**

The invention relates to high speed data transmission between an electrical system and an optical network adapted for optical data transmission and an object of the invention is, to provide a new and improved approach by simultaneously reducing the necessary amount of gates and the required power significantly.

For ensuring parallel data transmission and reception based on a high speed transmission rate between an electrical system (1) and an optical network (2) adapted for optical data transmission, according to invention solution a plurality of logical channels (TXDATA, RXDATA) with the data to be transmitted embedded therein is synchronously transmitted from the electrical system (1) to the optical network (2) together with an additional control channel (TXPAR) comprising information usable for detecting a transmission error by a respective adapted receiving means of the optical network, and wherein a clock rate is ensured having the half rate in relation to the transmission rate of a respective logical channel (TXDATA, RXDATA).

## Description

The invention relates to a method for ensuring high speed data transmission between an electrical system and an optical network adapted for optical data transmission and to an electrical device and an interface circuit having such functionality.

As known, for the transmission of data the use of optical networks is significantly increasing, since an optical transmission using optical fibers for example, can be performed on a high data rate. However, a pre-requisite for the optical data transmission is the coupling of such optical networks with electrical systems for the generation or provision and/or for the further processing of the transmission data.

Furthermore, to transmit a framed signal provided by the electrical system and based on a plurality of logical data channels each of which having a pre-defined data rate provided by the electrical system, the plurality of logical data channels have to be multiplexed to merely one data signal having a higher data rate for the transmitting via the optical network.

If, for example, the framed signal is based on 16 data channels, each transmitted by the electrical system with a respective data rate of 2.5 Gbit/s, then the data rate of the multiplexed data signal adapted to be transmitted by the optical network via an optical fiber comprises a bandwidth of 40Gbit/s. Accordingly, even for the regeneration of the data transmitted by the optical network, the data signal having a bandwidth of for example 40Gbit/s has to be de-multiplexed into the original framed signal based on the 16 data channels each having 2,5 Gbit/s for the further processing by the electrical system.

Consequently, for the coupling of the optical network with the electrical system an interface circuit is necessary. Such an interface circuit usually has to perform four individual functions. In detail, for both data transmission directions, i.e. from the electrical system to the optical network (egress) and vice versa (ingress), a transmitting functionality and a receiving functionally has to be supported, respectively.

The specific device of the electrical system, that is coupled to the specific device of the optical network usually comprises an application specific integrated circuit (ASIC) manufactured on the basis of known so-called CMOS technology. Although the manufacturing of a CMOS device, which is fast enough to work up to 10 Gbit/s substantially is possible today, the specific device of the optical network, however, is produced usually on the basis of known bipolar technology.

For providing compatibility to different network and/or system providers in particular with regard to optical high speed data transmissions, the Optical Internetworking Forum (OIF) is currently defining an industry SFI-5 standard for the interface between 40 Gbit/s optical transponder modules and CMOS ASICs, which is referred-to in the following description as SFI-5. The SFI-5 standard is adapted for the transmission of 16 interleaved data channels, each having a transmission rate of 2,5Gbit/s.

This SFI-5 standard defines in addition to 16 parallel data channels respectively asynchronously transmitted on a data line with a data rate of 2.5 Gbit/s of the entire 40 Gbit/s data signal a 17^{th} data channel, the so called deskew channel. On this deskew channel the transmitted data comprise a frame start marker, followed by some overhead bytes. Subsequently, on the deskew channel 64 bits of the 16^{th} data channel, 64 bits of the 15^{th} data channel, ... and 64 bits of 1^{st} data channel is time-multiplexed transmitted.

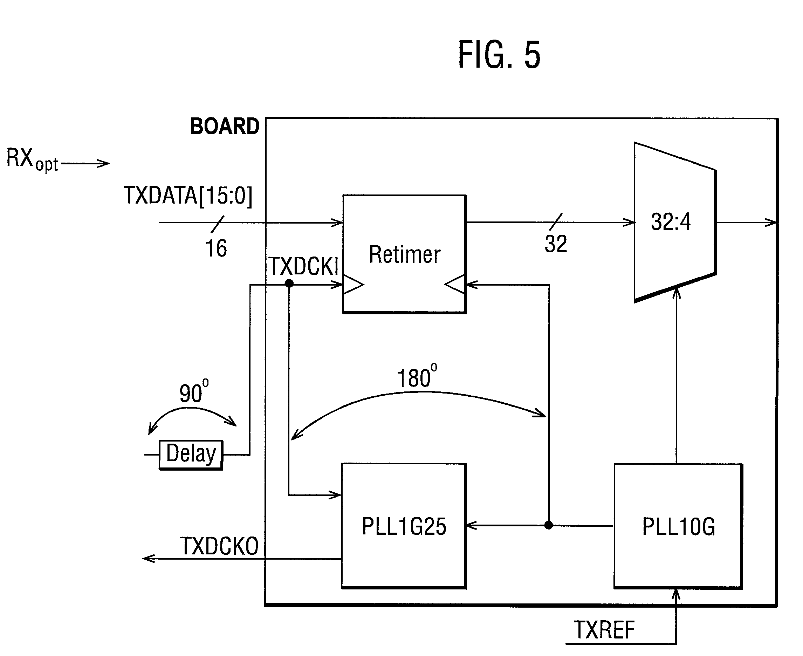

This deskew channel information is then used on the receiving side, e.g. on the specific device of the optical network in conjunction with a small elastic store or delay element to find the correct position for a read pointer to read out the 16 data channels, like they were sent into this parallel link interface at the transmit side, as it schematically depicted by the accompanied Fig. 5.

However, one of the draw backs of such envisaged standardized solution is, that the required logic of the receiving side, in particular of the 40 Gbit/s optical transponder modules, is too large to be fit into the bipolar technologies, which are used today for such a specific device of the optical network, as mentioned above.

To built up the required elastic store on the bipolar device of the optical network, being a so called SERDES, i.e. a serializer/de-serializer forming a high speed component, up to 100 flip-flops per channel are required resulting in a lot of additional power. Furthermore, the gate overhead will also reduce the yield of these devices, as they have to grow dramatically.

On the other hand, as mentioned above, pure CMOS technology is not yet fast enough to work up to 10 Gbit/s, like required for such a SERDES device in optical transponder modules.

Thus, an object of the invention is, to provide a new and improved approach with regard to said state of the art, for ensuring high speed data transmission between an electrical system and an optical network adapted for optical data transmission by simultaneously reducing the necessary amount of gate and the required power significantly.

The inventive solution is achieved by a method, a device and an interface circuit according to claim 1, 6 and 15, respectively.

Advantageous and/or preferred embodiments or refinements are the subject matter of the respective dependent claims.

Accordingly, the invention proposes a significantly improved interface coupling of the specific device of the electrical system with the specific device of the optical network by increasing several constrains concerning the electrical device of the electrical system, in particular the CMOS part of the electrical transmitter device, resulting in a considerable reduction of the size of the bipolar device of the optical network.

In particular, for the transmission of a high speed data signal having a plurality of logical data channels from the electrical system to the optical network, a synchronous transmission is proposed for ensuring a predictability concerning any misalignment of data. This can be further increased, if the data lines provided for the logical data channels are of the same length, so that any differences with regard to the data transfer times are in substantial avoided. Additionally, a further control channel comprising information usable at the receiving part of the optical network for detecting a transmission error is preferably synchronously transmitted and a clock rate is ensured having the half rate in relation to the transmission rate of a respective logical channel for directly ordering the received data using both edges of the clock.

Practically, a phase lock loop comprised by the electrical transmitter device is bypassed for suppressing any jitter caused by an irregular clocking due to the phase lock loop. According to a preferred refinement, the clock is supplied externally, for providing an selectable and correct clock rate.

For ensuring a significantly simplified but effective way of detecting an transmission error a parity channel is transmitted as the further control channel for guaranteeing a real time parallel link supervision.

According to a preferred embodiment, the inventive solution is adapted to operate with channel speeds from 2.5 Gbit/s up to 3.125 Gbit/s to enable the standard IEEE G.709 and even further enhanced FEC options.

As a result, the invention can be seen as an enhancement to the above mentioned SFI-5 standard interface between optic transponder modules and CMOS ASICs and reduces the amount of required logic on the bipolar receiver interface and hence, the content of the SFI-5 is fully incorporated to the disclosure of this application by referencing.

In substantial all improvements only apply for the transmit side with regard to the SFI-5 CMOS part. The receive side, like defined in SFI-5 is not affected. If the improvements are controllable via a control signal, the CMOS transmitter device can also operate in pure SFI-5 mode and/or between two CMOS-devices, such as for example between a framer and a FEC-processor, which often is directly located in front of the optical components of transmission systems or networks.

Accordingly, the invention provides a possibility which reduces the number of flip-flops in the SERDES device from approximately hundred per data channel to two. The improved yield of the bipolar SERDES devices results in reduced costs. Moreover, the power of the bipolar SERDES devices and overall inside the optical transponder modules is reduced.

Consequently, the corresponding preferred inventive interface circuit provides full SFI-5 functionality for CMOS devices, minimizes the efforts for the bipolar device and for the CMOS (Egress) device.

The invention is subsequently described on the basis of a preferred embodiment and with regard to the accompanying drawing, in which:
- Fig. 1: shows a schematic diagram of an exemplar inventive interface between an FEC-processor and an optical module,
- Fig. 2: schematically shows an exemplar logical egress model of the electrical transmitter device,
- Fig. 3: schematically shows an exemplar logical ingress model of the electrical receiver device,
- Fig. 4: schematically shows an exemplar logical ingress model of the optical transmitter device,
- Fig. 5: shows a schematic diagram of an exemplar logical model of the optical receiver device connected to a circuit board,
- Fig. 6: shows the retiming functionality of the inventive optical receiver device according to Fig. 5 in more detail, and
- Fig. 7: schematically shows an exemplar logical model of the optical receiver device according to SFI-5.

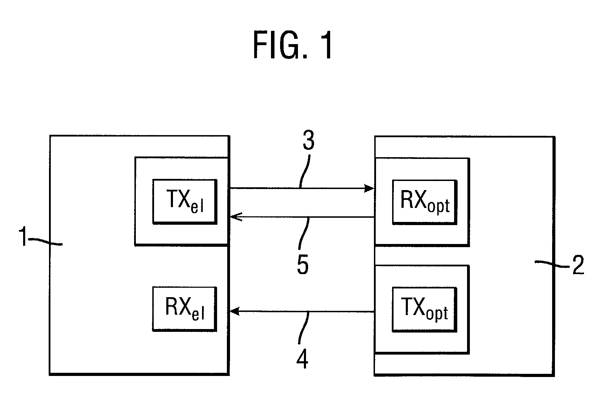

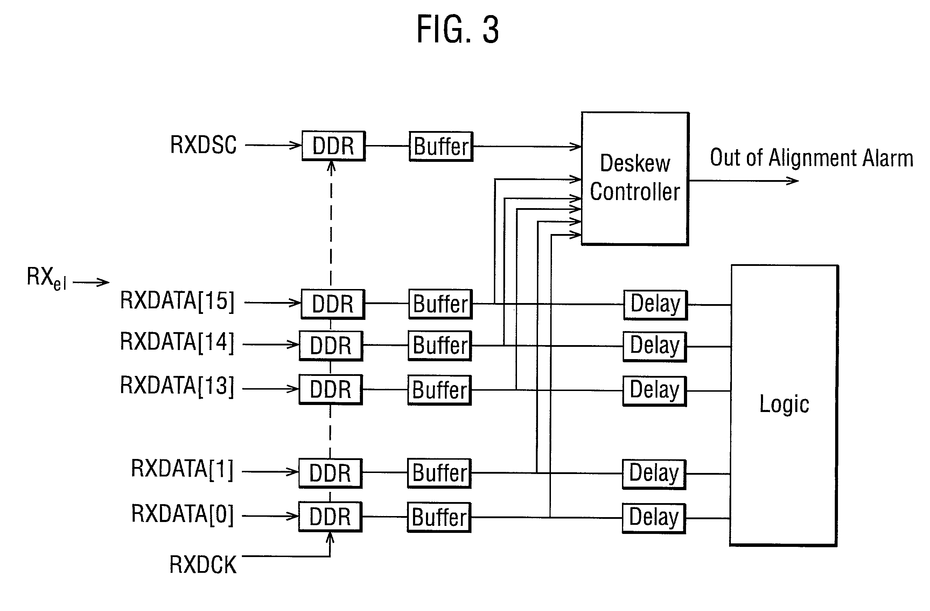

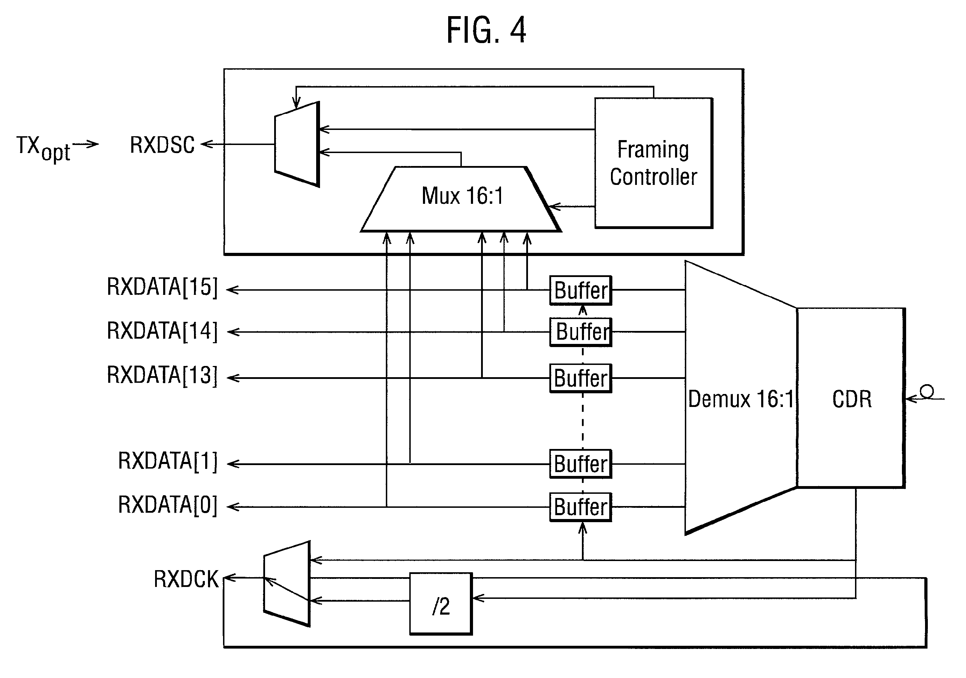

Referring next to Fig. 1 to Fig. 6 each of which schematically showing essential aspects of a very preferred inventive interface embodiment incorporating a parity channel for real time parallel link supervision and a bypass mode for the transmit PLL, which uses a half rate clock of for example 1.25GHz to make it a contra directional interface, using a data accompanying clock selectable as half rate clock instead of a quarter rate clock according to SFI-5 and a synchronous transmission mode for 16 data channels TXDATA [15:0] and RXDATA [15:0] of respectively 2.5 Gbit/s, the parity and the half rate clock with a specified maximum skew of 80 ps. However, even a lower or higher maximum skew is possible, in particular dependent on the respective specific system parameters.

More detailed, Fig. 1 is schematically depicting an interface circuit between an FEC-processor 1 and an optical module 2. The FEC-processor 1 based on CMOS-ASICs includes a transmitter device TXₑₗ and a receiver device RXₑₗ. The optical module 2 based on bipolar components also includes a transmitter device TXₒₚₜ and a receiver device RXₒₚₜ. These electrical and optical devices are practically located on one board and respectively the electrical and/or optical devices can be produced as forming one or several components.

It should be obviously for a person skilled in the art, that the optical module 2 also can be provided on the basis of CMOS-technology.

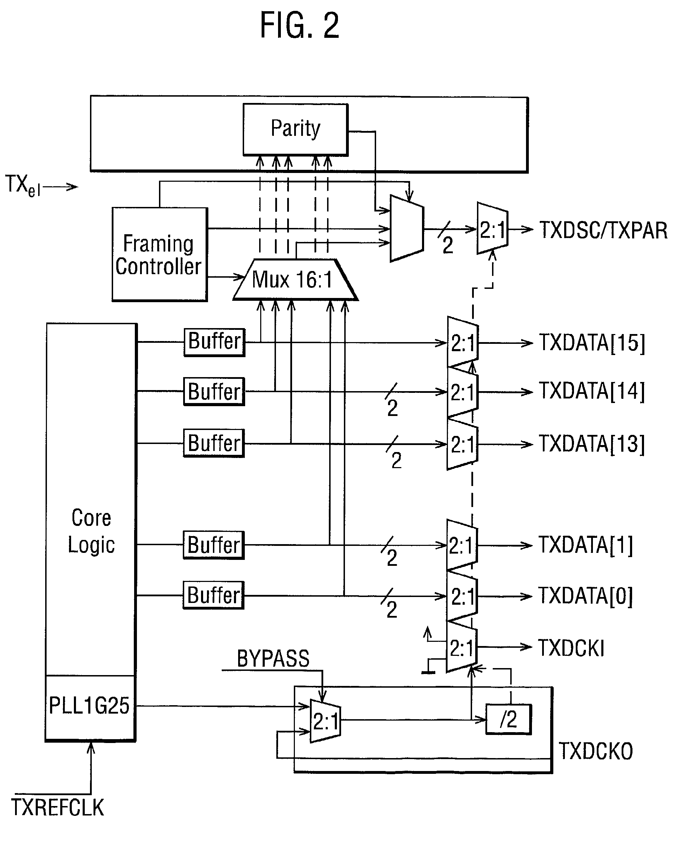

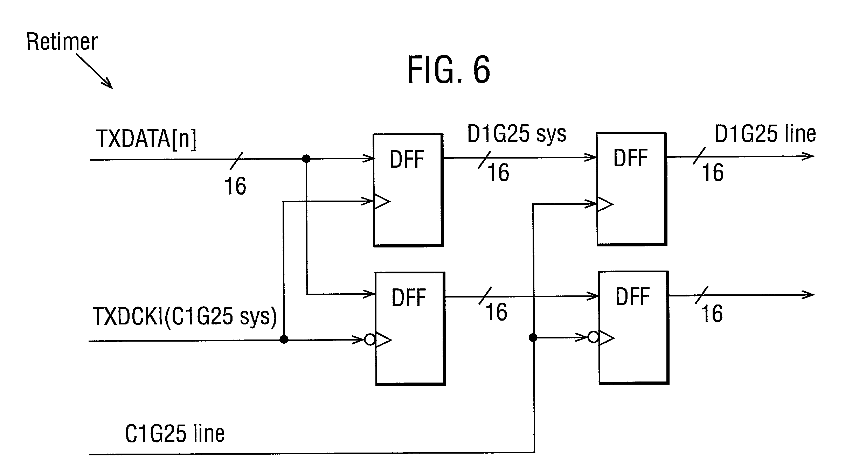

The arrows 3 and 5 represent the egress direction, i.e. from the FEC-processor 1 to the optical module 2, and arrow 4 represents the ingress direction of data transmission, i.e. from the optical module 2 to the FEC-processor 1. The interface at least in egress direction is contra-directional, as indicated by the arrow 5 and hence, the optical receiver RXₒₚₜ, as can be seen from Fig. 5 and 6, is controlling the clock TXDCKI according to which the CMOS-transmitter TXₑₗ has to transmit the framed data, as additionally indicated for example on Fig. 2 showing the logical egress model of that transmitter TXₑₗ by the signal line TXDCKO.

Moreover, even the number of flip-flops in the optical receiver device may be reduced from approximately hundred per data channel to two, the preferred embodiment, as depicted in Fig. 5 and 6 is provided with a retiming functionality based on four flip-flops per data channel for improving the timing due to jitter differences. With this embodiment jitter differences of up to 1 UI (unit interval) of a bit period could be processed (Fig. 6).

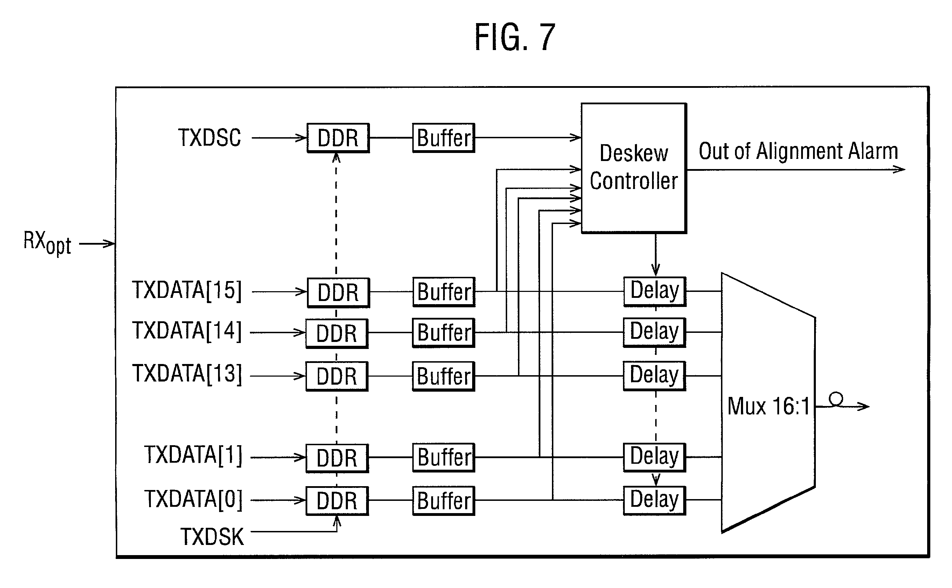

A logical model of the known optical receiver device RXₒₚₜ according to the SFI-5 is exemplary depicted on Fig. 7 for the reasons of comparing.

The transmitter TXₑₗ of the FEC-processor 1 for example has only one PLL with a transmit reference clock TXREFCLK for 16 data channel synchronously transmitted on differential signals, that can be additionally bypassed for selecting a half rate clock. For operating between two CMOS devices, such as for example between a framer and a FEC device or in a framer loop application, the additional control channel can be optionally selected also as deskew channel TXDSC and RXDSC. Then, the receiving unit is not based on the transmitted clock, since a minimal pre-given data misalignment is not necessary due to the deskew channel. It should be mentioned, that even the preferred receiver RXₑₗ of the electrical system does not need any timing constraints and can operate with data delays when using the deskew channel RXDSC.

However, for the interfacing with the optical module 2 the receiver RXₒₚₜ according to SFI-5 can be simplified with regard to the component design by using instead of the very complex deskew controller a simple parity evaluator. As a result, the delay elements in each channel can be avoided.

Accordingly, based on the preferred but exemplar interface as depicted by the Fig. 1 to 6, the electrical device for transmission TXₑₗ synchronously transmits the plurality of logical channels TXDATA [15:0] to be used for detecting a transmission error and can have a selected half rate clock, so that the optical device for reception RXₒₚₜ merely comprises means for detecting a transmission error based on the additional parity bit. The electrical device for reception RXₑₗ, however, preferably performs clock to data recovery and alignment of received logical data channels RXDATA, with its associated optical device for transmission TXₒₚₜ adapted for transmitting the plurality of logical channels RXDATA with the data to be transmitted embedded therein and for generating the deskew channel comprising information usable for deskewing means of the 16 data channels.

Consequently, by use of the invention skew compensation can be supported, but all data signal comprising the interface bus have preferably to fulfill a tight skew budget with respect to its related clock.
An asymmetrical interface circuit can be produced, wherein the transmitter TXₑₗ and TXₒₚₜ and receiving sides RXₑₗ and RXₒₚₜ may be different, dependent on the device where they are implemented.

Up to 50Gbit/s bi-directional aggregate data throughput can be supported with 16 parallel data signals each of which having a bit rate up to 3.125 Gbit/s. An inventive interface based thereon is qualified to transmit for example, the data of a SONET/SDH signal with 40Gbit/s bandwidth, of an ETHERNET signal or of a IEEE G.709 signal with Read Solomon FEC (plus 7.1% bit rate) with the interface independently of the type of optics - serial, DWDM or parallel, SMF or MMF.

By fully supporting the SFI-5 functionality for CMOS devices a selectable clock and at least in egress direction both a co- and contra-directional mode is supported and additional effort especially for the bipolar device RXₒₚₜ is minimized. Preferably, by providing a control signal, the CMOS transmitter device can be switched to operate in pure SFI-5 mode and/or between two CMOS-devices, such as for example between a framer and a FEC-processor,.

## Claims

1. Method for ensuring parallel data transmission and reception based on a high speed transmission rate between an electrical system and an optical network adapted for optical data transmission, wherein
a plurality of logical channels (TXDATA, RXDATA) with the data to be transmitted embedded therein is synchronously transmitted at least from the electrical system (1) to the optical network (2) together with an additional control channel (TXPAR) comprising information usable for detecting a transmission error by a respective adapted receiving means (RXₒₚₜ) of the optical network (2), and wherein a clock rate is ensured having the half rate in relation to the transmission rate of a respective logical channel (TXDATA, RXDATA).

2. Method of claim 1, wherein a phase lock loop (PLL) comprised by the electrical system (1) is bypassed during the data transmission from the electrical system (1) to the optical network (2).

3. Method of claim 1 or 2, wherein the clock rate is externally generated (TXDCKO).

4. Method of any preceding claim, wherein the control channel is generated as a parity channel (TXPAR) comprising for all corresponding positioned bits of the respective parallel logical data channels (TXDATA) a respective further parity bit.

5. Method of any preceding claim, wherein at least 16 data channels (TXDATA, RXDATA) are transmitted in parallel with a transmission rate of respectively 2.5 Gbit/s up to 3.125Gbit/s.

6. An electrical transmission device (TXₑₗ) adapted to be used within an interface circuit for ensuring parallel data transmission and reception based on a high speed transmission rate between an electrical system and an optical network adapted for optical data transmission, comprising
means for synchronously transmitting a plurality of logical channels (TXDATA) with the data to be transmitted embedded therein,
means for generating an additional control channel (TXPAR) comprising information usable for detecting a transmission error, and
means for generating a clock rate (TXDCKO) which is the half rate in relation to the transmission rate of a respective logical channel (TXDATA).

7. Electrical device of claim 6, wherein the control channel is generated as a parity channel (TXPAR) for real time parallel link supervision.

8. Electrical device of claim 6 or 7, having a phase lock loop means (PLL) and means for bypassing (BYPASS) said phase lock loop means (PLL).

9. Electrical device of any of claims 6 to 8, having means for transmitting the data based on an external clock.

10. Electrical device of any of claims 6 to 9, wherein the device is based on CMOS technology.

11. Electrical device of any of claims 6 to 10, having means for optionally generating the control channel as a deskew channel (TXDSC) comprising information usable for realignment based on deskew information.

12. Electrical device of any of claims 6 to 11, having means for controlling the bypass means, the means for generating the clock rate and/or to change from the synchronous transmission mode into an asynchronous mode.

13. Electrical device of any of claims 6 to 12, having data lines for transmitting the data channels (TXDATA) on printed circuit board wires of equal length.

14. Electrical device of any of claims 6 to 13, wherein the means for transmitting is adapted to operate with at least 16 data channel of 2.5 Gbit/s up to 3.125 Gbit/s.

15. Interface circuit adapted to be used for ensuring parallel data transmission and reception based on a high speed transmission rate between an electrical system and an optical network adapted for optical data transmission, the circuit comprises
an electrical device for transmission (TXₑₗ), an electrical device for reception (RXₑₗ), an optical device for transmission (TXₒₚₜ) and an optical device for reception (RXₒₚₜ), **characterized by**
an electrical device for transmission (TXₑₗ) according to any of claims 6 to 14

16. Interface circuit of claim 15, wherein the electrical device for reception (RXₑₗ) comprises
means (DDR) for performing a clock to data recovery,
means (Deskew Controller) for performing an alignment of received logical data channels (RXDATA).

17. Interface circuit of claim 15 or 16, wherein the optical device for transmission (TXₒₚₜ) comprises
means for transmitting a plurality of logical channels (RXDATA) with the data to be transmitted embedded therein,
means for generating an additional control channel (RXDSC) comprising information usable for performing clock to data recovery

18. Interface circuit of any of claims 15 to 17, wherein the optical device for reception (RXₒₚₜ) comprises
means for detecting a transmission error in dependent on the information embedded in the additional control channel (TXPAR) generated by the electrical device for transmission (TXₑₗ).

19. Interface circuit of any of claims 15 to 18, wherein the optical device for reception (RXₒₚₜ) comprises means (5) for transmitting a clock request to the electrical device for transmission (TXₑₗ).

20. Interface circuit of any of claims 15 to 19, wherein the optical devices for transmission (TXₒₚₜ) and for reception (RXₒₚₜ) are based on bipolar or CMOS technology.

21. Interface circuit of any of claims 15 to 20, wherein the electrical devices for transmission (TXₑₗ) and for reception (RXₑₗ) are based on CMOS technology.

22. Interface circuit of any of claims 15 to 21, wherein a control signal is provided for optionally switching to the operating mode according to the SFI-5 standard.
